# EUROPEAN PATENT APPLICATION

(11) **EP 4 180 655 A1**
(43) Date of publication of application: **17.05.2023**
(21) Application number: 21208305.9
(22) Date of filing: 15.11.2021
(51) Int. Cl.: F03D 7/02

(54) **ACTIVELY DAMPING VIBRATIONS IN WIND TURBINES**

(71) Applicant: Siemens Gamesa Renewable Energy A/S, 7330 Brande (DK)
(72) Inventor: Couturier, Philippe, Lafayette, 80026 (US); Gonzalez, Alejandro Gomez, 8000 Aarhus (DK); Molitor, David, Boulder, 80301 (US); Volk, Dillon, 58091 Hagen (DE)
(74) Representative: SGRE-Association

(57) **Abstract**

It is proposed a method (100) for damping vibrations in a wind turbine (10) including a plurality of blades (20), a plurality of sensors (30) and a plurality of active aerodynamic devices (40) on the plurality of blades (20), the method (100) comprising the steps of:
- receiving (110) a plurality of measurements from the plurality of sensors (30),
- applying (120) a multi-blade transform to the plurality of measurements,
- determining (140) at least a mode shape of the wind turbine (10) based on the results of the multi-blade transform,
- sending (150) an activation command to the active aerodynamic devices (40) so that the determined mode shape(s) is/are damped.

## Description

### Field of invention

The present invention relates to a method for actively damping vibrations in a wind turbine.

### Art Background

A wind turbine comprises a rotating mass, i.e. the rotor, placed at the end of an elongated structure, i.e. the tower, and is subject to vibrations induced from the environmental conditions, e.g. wind, waves, seismic. Vibrations include for example nacelle and/or tower and/or blades oscillations.

It is desirable to damp such oscillations, therefore extending the fatigue life and adding stability margin to the turbine. It has been shown that a small amount of added system damping has the potential for large edgewise extreme load and fatigue load reductions.

### Summary of the Invention

This need may be met by the subject matter according to the independent claims. Advantageous embodiments of the present invention are described by the dependent claims.

According to a first aspect of the present invention, it is provided a method for damping vibrations in a wind turbine including plurality of blades, a plurality of sensors and a plurality of active aerodynamic devices on the plurality of blades, the method comprising the steps of:
- receiving a plurality of measurements from the plurality of sensors,
- applying a multi-blade transform to the plurality of measurements,
- determining at least mode shape of the wind turbine based on the results of the multi-blade transform,
- sending an activation command to the active aerodynamic devices so that the determined mode shape(s) is/are damped.

According to a second aspect of the present invention, it is provided a wind turbine including a plurality of blades, a plurality of sensors, a plurality of active aerodynamic devices on the plurality of blade, and a controller configured for executing the method according to any of the previous claims.

The invention combines the use of distributed aerodynamic devices and control action based on global turbine modes in an inertia frame. Applying the control methodology at the multi-blade level allows a phase lag to be applied on the aerodynamic devices on each blade which increases damping control authority of both symmetric and asymmetric modes. Another benefit of this method is the ability to damp turbine modes which are composed of large tower deformations via controlling aerodynamic devices placed on other substructures, e.g. blade flaps.

The proposed solution reduces vibrations by synchronously controlling aerodynamic devices placed on more than one substructure, i.e. they may be located on the tower, nacelle, and/or blades and/or other substructures. The activation and control of these devices is based on identified excited vibration modes and their associated mode shapes of the entire wind turbine. The identification of modes uses signals from a plurality of sensors, which may be placed on one or more of the above-mentioned substructures. A multi-blade transform is applied for transforming data from a substructure (local) to inertia (non-rotating) frame of reference. One of such multi-blade transform is the "Coleman transform" which was originally developed for studying helicopter modes.

Different active aerodynamic devices can be used for the purposes of the present invention. According to embodiments of the present invention, the aerodynamic device is an active flap, i.e. an aerodynamic device installed on the rotor blade, for example at the trailing edge. Alternatively, the aerodynamic device may be an active spoiler. According to embodiments of the present invention, flaps and/or spoilers are together provided on the rotor blade and both types of aerodynamic devices may be used to remove vibrations in the rotor blade, according to the present invention.

The active aerodynamic devices may be positioned not only on the blades. The active aerodynamic devices may be positioned on any component of the wind turbine, for example the tower and/or the nacelle and/or the hub and/or the foundation. For example, a nacelle drag inducer, or a tower drag inducer may be used. According to other embodiments of the present invention, any other active aerodynamic device may be used, which permits damping of the wind turbine.

Different sensors can be used for the purposes of the present invention. According to embodiments of the present invention, the sensors may include any of an accelerometer, a strain-gauge, or a deflection sensor. According to other embodiments of the present invention, any other sensor may be used, which permits measurement data to which the multi-blade transform is applicable. The sensors may be positioned on any component of the wind turbine, for example the tower and/or the nacelle and/or the hub and/or the foundation.

It should be understood that features which have individually or in any combination been disclosed for a method removing vibrations in wind turbine blades may also, individually or in any combination provided for an arrangement for removing vibrations in a wind turbine (in particular comprised in a blade for a wind turbine) according to embodiments of the present invention and vice versa.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic view of the wind turbine according to the present invention.
- Figure 2: shows a schematic view of some the mode shape of the wind turbine of figure 1.
- Figure 3: show a block diagram of a method for damping vibrations in a wind turbine according to the present invention.

### Detailed Description

The drawings are in schematic form. Similar or identical elements are referenced by the same or different reference signs.

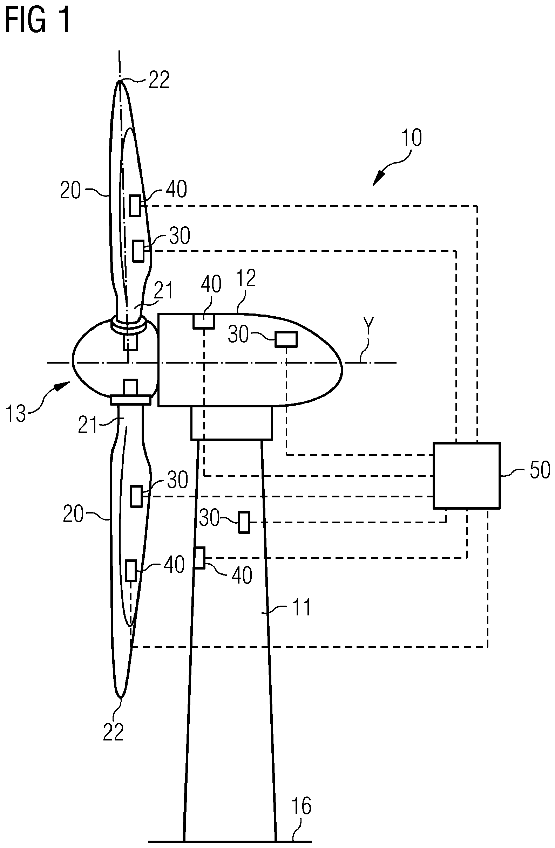

**Figure 1** shows a wind turbine 10 for generating electricity. The wind turbine 10 comprises a tower 11 which is mounted on the ground 16 at one end. According to another embodiment of the present invention, the wind turbine 10 may be a floating wind turbine. At the opposite end of the tower 11 there is mounted a nacelle 12. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). Furthermore, the wind turbine 10 comprises a hub 13 which is rotatable about a rotor axis Y. When not differently specified, the terms axial, radial and circumferential in the following are made with reference to the rotor axis Y. The hub 13 is often described as being a part of a wind turbine rotor, wherein the wind turbine rotor comprises the hub 13 and the blades 20 and is capable to rotate about the rotor axis Y and to transfer the rotational energy to an electrical generator (not shown).

The wind turbine 10 further comprises a plurality of blades 20 (in the embodiment of Figure 1, the wind rotor comprises three blades 20, of which only two blades 20 are visible) mounted on the hub 13. The blades 20 extend substantially radially with respect to the rotational axis Y.

Each rotor blade 20 is usually mounted pivotable to the hub 13, in order to be pitched about respective pitch axes X. This improves the control of the wind turbine and in particular of the rotor blades by the possibility of modifying the direction at which the wind is hitting the rotor blades 20. Each rotor blade 20 is mounted to the hub 13 at its root section 21. The root section 21 is opposed to the tip section 22 of the rotor blade.

The wind turbine 10 further comprises a plurality of aerodynamic devices 40. Each aerodynamic device 30 may be provided on the blades 20 or on the nacelle 12 or the tower 11. Each rotor blade 20 may comprise one or more aerodynamic devices 40 in the form of actuated flaps or actuated spoilers. Aerodynamic devices 40 may be provided additionally or alternatively on the nacelle 12 or on the tower 11, for example in the form of drag inducers. The aerodynamic device 40 are movable by means of actuators (not shown in the figure) between an active and an inactive position

The wind turbine 10 further comprises a plurality of sensors 40. Each sensor 30 may be provided on the blades 20 or on the nacelle 12 or the tower 11. Each sensor 30 may be in the form of an accelerometer or a strain-gauge or a deflection sensor or a vibration sensor or any other sensor providing a signal which can be used to determine a local or global deformation of the wind turbine.

The wind turbine 10 further comprises a controller 50 connected to the sensors 30 and the aerodynamic devices 30. The controller 50 receives and elaborates the signal from the sensors 30 to determine vibrations in the wind turbine 10, as better clarified in the following. The controller 50 operates the aerodynamic devices 30 to damp the vibrations of the wind turbine 10, as better clarified in the following.

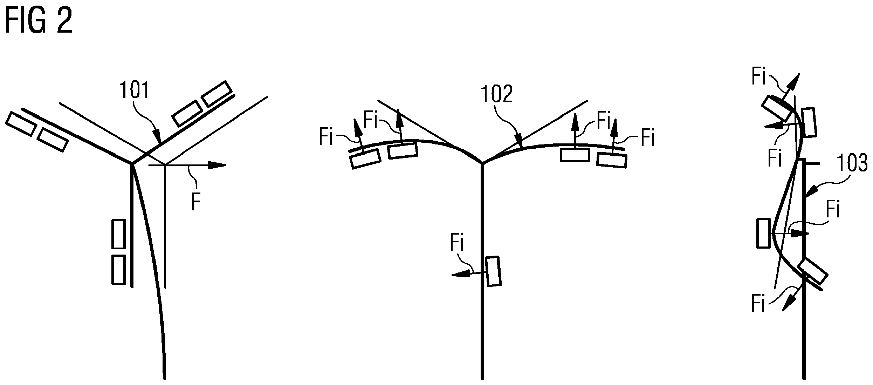

**Figure 2** shows three known mode shapes according to which the wind turbine 10 may be subject to vibrate. The wind turbine 10 is an elastic structure in a transient environment and have coupled aeroelastic modes of flexure. The mode shapes, or primary patterns of deformation are expressed in each substructure. By the size and loading path of the rotor substructure, the patterns of the rotor substructure dominate the entire superstructure (foundation, offshore support, tower, nacelle, rotor). The patterns of deformation of the rotor involve synchronous relative blade motion. Based on the deformation direction and the level of synchrony of the blades, different rotor modes may be excited during operation. For example, with reference to figure 2, a first mode 101 correspond to a lateral bending of the tower 11. When the first mode 101 is identified according to the method of the present invention the aerodynamic devices 30 are activated in order to generate a lateral force F, which is applied to the nacelle and which tend to contrast the bending of the tower, thus damping the vibrations of the wind turbine 10 according to the first mode 101, i.e. forcing the wind turbine 10 towards the undeformed configuration. A second mode 102 correspond to an edgewise vertical deflection of the blades 20. When the second mode 102 is identified according to the method of the present invention the aerodynamic devices 30 are activated in order to generate a plurality of forces Fi, each applied to the respective aerodynamic devices 30 and which tend to contrast the edgewise vertical deflection of the blades 20, thus damping the vibrations of the wind turbine 10 according to the second mode 102. A third mode 103 correspond to a flapwise tilt of the wind turbine rotor. When the third mode 103 is identified according to the method of the present invention the aerodynamic devices 30 are activated in order to generate a plurality of forces Fi, each applied to the respective aerodynamic devices 30 and which tend to contrast the flapwise tilt of the wind turbine rotor, thus damping the vibrations of the wind turbine 10 according to the third mode 103. The wind turbine 10 may be subject to a plurality of other modes, different from the ones shown in figure 2, which, similarly as defined above, may be damped by activating the aerodynamic devices 30 according to the method of the present invention.

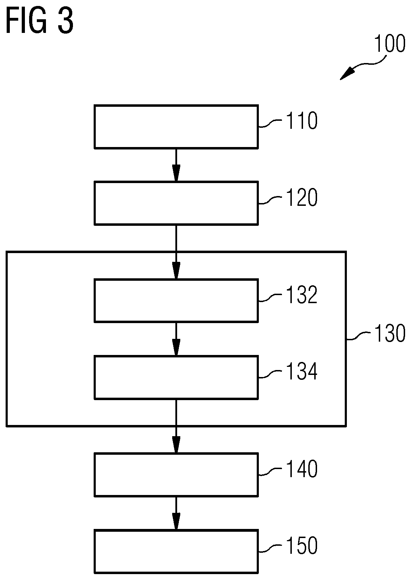

**Figure 3** describes a sequence of steps of a method 100 for damping vibrations in the wind turbine 10. The steps of the method 100 described in the following may be performed in the controller 50. The method 100 comprises a first step 110 of receiving a plurality of measurements from the plurality of sensors 30. In a second step 120 of the method a multi-blade transform is applied to the plurality of measurements received in the first step 110. The multi-blade transform performs a transformation from a local substructure, i.e. the component where the sensor is positioned, to an inertia (non-rotating) frame of reference. The method 100 may comprises a further third step 130 of postprocessing the results of the multi-blade transform. The third step 130 comprises a first sub-step 132 of extracting the frequency components from the results of the multi-blade transform. Frequency and phase of the signal may permit to attenuate the mode more effectively, as the wrong frequency of activation (or phase) may result in amplification. The third step of postprocessing 130 may comprise at least a second sub-step of data fusing 134 applied to the results of the first sub-step of extracting 132 the frequency components. Data fusing may be used to improve mode identification convergence of inputs, i.e. live correction of poor signals via other trusted sensors. In embodiment of the present invention, the third step 130 may comprise only the first sub-step 132 or the second sub-step 134. After the second step 120 or the third step 130, the method includes a fourth step 140 of determining at least a mode shape of the wind turbine 10 based on the results of the multi-blade transform. The mode shapes 101, 102, 103 of figure 2 may be determined. After a mode shape have been determined, the method include a fifth step 150 of sending an activation command to the active aerodynamic devices 40 so that the determined critical mode shape(s) is/are damped. The activation of the aerodynamic devices 40 determines a resultant force F or a plurality of forces Fi, which damp the vibrations in the wind turbine by forcing it towards the undeformed configuration.

In embodiments of the present invention, the activation frequency of the aerodynamic devices 30 is high enough in order to be used to attenuate actively the vibration of the detected mode. In a different embodiment, where the maximum activation frequency of the aerodynamic devices 30 is not high enough as the vibration mode to be damped, the aerodynamic devices 30 may be activated in order to cause a change in the operation point of the turbine, adjusting it in a way where the damping level of that particular mode is increased. For example, spoilers or flaps may be activated in such a way as to force the pitch of the blade into a position where the global rotor modes have a higher damping level.

In embodiments of the present invention, the first step 110, the second step 120 and the fourth step 140 are performed continuously. The other steps of the method are then performed when a difference between the values measured in two subsequent executions of the method 100 are greater than a predefined threshold.

## Claims

1. A method (100) for damping vibrations in a wind turbine (10) including a plurality of blades (20), a plurality of sensors (30) and a plurality of active aerodynamic devices (40) on the plurality of blades (20), the method (100) comprising the steps of:
- receiving (110) a plurality of measurements from the plurality of sensors (30),
- applying (120) a multi-blade transform to the plurality of measurements,
- determining (140) at least a mode shape of the wind turbine (10) based on the results of the multi-blade transform,
- sending (150) an activation command to the active aerodynamic devices (40) so that the determined mode shape(s) is/are damped.

2. The method (100) according to claim 1, wherein the method (100) comprises a further step of postprocessing (130) the results of the multi-blade transform before the step of determining (140), the step of postprocessing (130) comprising at least a sub-step of extracting (132) frequency components from the results of the multi-blade transform.

3. The method (100) according to claim 1 or 2 wherein the method (100) comprises a further step of postprocessing (130) the results of the multi-blade transform before the step of determining (140), the step of postprocessing (130) comprising at least a sub-step of data fusing (134) applied to the results of the first sub-step of extracting (132) before the step of determining (140).

4. The method (100) according to any of the claims 1 to 3, wherein the step of receiving (110) a plurality of measurements from the plurality of sensors (30) is performed continuously.

5. A wind turbine (10) including plurality of blades (20), a plurality of sensors (30), a plurality of active aerodynamic devices (40) on the plurality of blades (20), and a controller (50) configured for executing the method (100) according to any of the previous claims.

6. The wind turbine (10) according to claim 5, wherein the sensors (30) include any of:
an accelerometer,
a strain-gauge,
a deflection sensor.

7. The wind turbine (10) according to claim 5 or 6, wherein the sensors (30) are positioned on a blade (20) and/or tower (11) and/or nacelle (12) and/or hub (13) and/or foundation of the wind turbine (10).

8. The wind turbine (10) according to any of the claims 5 to 7, wherein the active aerodynamic devices (40) include any of:
an active flap,
an active spoiler,
a nacelle drag inducer,
a tower drag inducer

9. The wind turbine (10) according to any of the claims 5 to 8, wherein the active aerodynamic devices (40) are positioned on a blade (20) and/or tower (11) and/or nacelle (12) and/or hub (13) and/or foundation of the wind turbine (10).

10. The wind turbine (10) according to any of the claims 5 to 9, wherein the wind turbine (10) is a floating wind turbine.
